# EUROPEAN PATENT APPLICATION

(11) **EP 4 611 080 A1**
(43) Date of publication of application: **03.09.2025**
(21) Application number: 24315064.6
(22) Date of filing: 27.02.2024
(51) Int. Cl.: H01M 8/04089, H01M 8/04082, H01M 8/04223, H01M 8/0432, H01M 8/0438, H01M 8/04746, H01M 8/2475

(54) **ELECTRIC GENERATOR UNIT SUPPLIED WITH HYDROGEN CARTRIDGES**

(71) Applicant: H2X Ecosystems, 35170 Bruz (FR)
(72) Inventor: Paul, Stéphane, 29200 BREST (FR); Fleureau, Jean-Luc, 29460 DAOULAS (FR)
(74) Representative: Yes My Patent

(57) **Abstract**

An electric generator unit (10) comprising a fuel cell (1), a main control unit (4) for controlling the operation of the electric generator unit, and a plurality of cartridge slots (12), wherein the fuel cell (1) is configured to be supplied by a plurality of hydrogen cartridges (2), each hydrogen cartridge being removably mounted in one cartridge slot of the electric generator unit, wherein the plurality of hydrogen cartridges is configured to be fluidly coupled to a supply manifold (9) in a parallel arrangement, wherein each of the plurality of hydrogen cartridges (2) comprises a pressurized reservoir (21), a head unit (22) with a pressure sensor (23) an electro-valve (61,65) and a gas regulator (66), wherein each hydrogen cartridge is removably coupled to the supply manifold (9) by a quick connect fluid connection (7).

## Description

### FIELD OF THE DISCLOSURE

The instant disclosure relates to electric generator units, in particular, electric generator units using a fuel cell supplied by a hydrogen tank or reservoir.

### BACKGROUND OF THE DISCLOSURE

Electric generator units are used in some use cases and/or circumstances, such as on sites where the electrical grid is not available, or aboard mobile entities such as vehicles. Vehicles can be terrestrial vehicles, boats, aircrafts, submarines, and space devices. Vehicles at stake can be motorized vehicles or can be trailers. We also consider here electrical generators in military environment and in military equipment. For many facilities, electrical generators are also used as backup power systems in case the electrical grid supply is down.

Most of the known electric generator units use internal combustion engines, using fossil fuels. Internal combustion engines are noisy and emit polluting gases. There is a need for more silent and less polluting electric generator units.

Some new electric generator units use a fuel cell device supplied by a hydrogen reservoir, such as US2020/044299 relying on a small capacity hydrogen reservoir.

Besides, it is not easy to store a substantial quantity of hydrogen gas in a compact format. Hydrogen gas has to be deeply cooled or highly compressed to be stored in a compact manner.

Besides, there are regulations impacting the transportation of some goods, which forbids to transport of large quantities of sensitive material in one shipment or in one vehicle.

The present inventors have sought to tackle the challenge of large autonomy requirements regarding such fuel cell based electric generator units, that can be subject to transportation.

### SUMMARY OF THE DISCLOSURE

According to one aspect of the present disclosure, it is disclosed an electric generator unit (10) comprising at least a fuel cell (1), a main control unit (4) for controlling the operation of the electric generator unit, and a plurality of cartridge slots (12), wherein the fuel cell is configured to be supplied by a plurality of hydrogen cartridges (2), each hydrogen cartridge being removably mounted in one cartridge slot of the electric generator unit, the plurality of hydrogen cartridges configured to be fluidly coupled to a supply manifold (9) in a parallel arrangement, wherein each of the plurality of hydrogen cartridges comprises a pressurized reservoir (21), a head unit (22) with a pressure sensor (28), an electro-valve (61) and a gas regulator (64), wherein each hydrogen cartridge is removably coupled to the supply manifold (9) by a quick connect fluid connection (7).

Using several hydrogen cartridges turn out to be a good compromise as per reservoir structure and weight in view of the large autonomy requirements for the electric generator unit. Indeed, the ratio of the weight of reservoir versus the weight of contained hydrogen gas increases when the quantity of contained hydrogen gas increases. In practice, it is beneficial to use several small reservoirs rather than a large reservoir.

Furthermore, it is important to propose a resupply process, even though there is no hydrogen recharge station in the vicinity.

Further, hydrogen cartridges can be transported/shipped independently from the base equipment of the electric generator unit.

Each hydrogen cartridge includes a gas pressure regulator to supply hydrogen gas at a predetermined pressure, independently of the pressure prevailing in the cartridge reservoir. The predetermined pressure can be chosen around 10 bars. This enables to connect or disconnect quick connect fluid connection even though said predetermined pressure prevails in the supply manifold.

In addition, when several hydrogen cartridges are fluidly coupled in a parallel arrangement, it can be considered that only one electro-valve is opened at a given time. Only one cartridge is used at a given time, whereas the other cartridges remain in stand-by mode.

Upon certain conditions, the main control unit can switch the supply from one cartridge to another cartridge. In practice, the main control unit closes the electro-valve of one cartridge and opens the electro-valve of another cartridge.

While one hydrogen cartridge is currently supplying hydrogen to the fuel cell, another hydrogen cartridge can be exchanged, thereby providing a hot resupply capability.

In some particular circumstances, for example in case of high hydrogen flow demand from the fuel cell, two or more electro-valves can be opened simultaneously (parallel supply from two cartridges).

Thanks to the promoted system, the promoted hydrogen cartridges have a reasonable weight and can be handled without hoisting equipment, by one or two persons.

The term 'a plurality' of hydrogen cartridges means at least two hydrogen cartridges, and very often at least three hydrogen cartridges.

The power rating of the electric generator unit can be 15kW. Other power ratings are encompassed in the present disclosure.

According to an aspect, the electric generator unit further comprises an electrical battery supplied by the fuel cell (downstream the fuel cell) and able to support peaks of current consumption and generally provides leveling/smoothening of the electrical consumption fluctuations. In the electric generator unit, there may be provided one or more inverter(s) and/or one or more DC/DC converter(s) downstream the fuel cell and the electrical battery, as known per se, depending on the electrical outputs provided on the electric generator unit.

Here the term "*hydrogen cartridge"* is to be understood as a reusable hydrogen gas unit or otherwise hydrogen gas module, that can be refilled and re-used, and is easy to handle and couple to a counterpart device.

The term "*cartridge slot"* is to be understood as a place to house a hydrogen cartridge.

In the present disclosure, the locution "*pressurized bottle"* is equivalent to "*pressurized reservoir*" otherwise designating a small portable tank.

A quick fluid connection enables to rapidly connect a male connector to a female connector thereby forming a quick coupling interface.

It is possible to use several electric generator units of the type exposed above, arranged in a network of generators distributed across a geographical area, sharing common resources formed by hydrogen cartridges.

According to one aspect, the electro-valve (61) of each hydrogen cartridge is controlled by the main control unit, via an electrical connector coupling the hydrogen cartridge to the main control unit. The electric generator unit comprises a base equipment, the interface between each hydrogen cartridge, and said base equipment includes the above mentioned quick connect fluid connection and said electrical connector.

The reservoir of each hydrogen cartridge is fluidly connected, via the controlled electro valve, to the fuel cell supply manifold under conditions of operation determined and controlled by the main control unit.

In an optional logic, even though there are several hydrogen cartridges available, only one is used at a given time. As already mentioned above, a switch from one country to another cartridge is possible. Also, it is not excluded to have more than one cartridge in service in parallel.

According to a further aspect, the main control unit acquires, for each hydrogen cartridge, a sensed pressure prevailing in the corresponding pressurized reservoir.

This enables an estimated assessment of the remaining quantity of hydrogen in each hydrogen cartridge. There may be provided a lookup table linking the sensed pressure and the remaining hydrogen quantity, for a given type of reservoir (notably inner volume).

Therefrom, the main control unit can sum the estimated hydrogen remaining quantities in all the present hydrogen cartridges in the electric generator unit, and the main control unit can display the total remaining autonomy for a reference power output, e.g. 15kW.

According to a further aspect, the electrical connector comprises electrical ways allocated to :
- electro-valve control
- pressure sensor
- temperature sensor

Therefore, this electrical interface allows not only to control of the electro-valve from the main control unit but also acquiring by the main control unit, the prevailing pressure and the prevailing temperature in each pressurized reservoir in place.

According to a further aspect, there is provided a nitrogen reservoir configured to be selectively coupled to the supply manifold in order to render the fuel cell inert for long non-use periods. Therefore, this enables unattended storage of the unit in various environmental conditions. Inerted fuel cell is in safety configuration.

According to one aspect, there is provided a supply manifold purge valve to purge the supply manifold before rendering the fuel cell inert. The supply manifold is emptied before injecting nitrogen.

According to a further aspect, each of the plurality of hydrogen cartridges may comprise an electronic unit (5) configured to acquire a sensed pressure prevailing in the pressurized reservoir, to assess a hydrogen remaining quantity index, and to wirelessly send cartridge individual data toward the main control unit.

Such hydrogen cartridge with a local electronic unit forms a device with a certain autonomy.

The local electronic unit may include a look up table to transform a sensed pressure into a remaining quantity. This lookup table can be an abacus, taking into account the sensed temperature.

The quantity of remaining hydrogen can be expressed in grams or can be expressed in a percentage of a nominal capacity.

According to a further aspect, the cartridge individual data includes at least a unique identifier, and cartridge particulars. Said cartridge particulars include pressure sensor data and temperature sensor data, representative of the prevailing pressure in the pressurized reservoir, and/or an inner temperature prevailing in the pressurized reservoir.

Cartridge particulars may possibly also include a geolocation information, and an estimated remaining hydrogen quantity.

According to one aspect, the head device comprises a unique identifier for each hydrogen cartridge. Each hydrogen cartridge can be individually recognized and the data about a cartridge cannot be mixed with another one. Managing a complete set of cartridges is therefore reliable, even with a large number of hydrogen cartridges. It is also possible and easy to add new hydrogen cartridges to the system. Using such cartridge identifiers is useful in case of a plurality of electric generators, in service at various locations.

According to one aspect, the unique identifier is transmitted within each uplink communication from a head device to a server. Therefore, from the server viewpoint, the data coming from the field can be unambiguously allocated to the proper hydrogen cartridge.

According to a further aspect, the generator exhibits a power rating of at least 10 kW in continuous mode, preferably about 15 kW in continuous mode.

According to a further aspect, the head unit comprises an embedded battery, with an electrical storage capacity comprised between 1000 mAh and 5000 mAh. The embedded battery can be a rechargeable battery. The rechargeable battery can be recharged through an inductive interface.

According to a further aspect, the plurality of hydrogen cartridges comprises five cartridge slots for housing five removable hydrogen cartridges. This provides high flexibility of the solution. According to the autonomy requirement, 2 to 5 hydrogen cartridges can be effectively loaded in the generator unit. For some mission profiles, three hydrogen cartridges can be sufficient.

According to a further aspect, there is provided one individual compartment for each hydrogen cartridge. The total number of hydrogen cartridges can be larger than the number of compartments, taking into account spare hydrogen cartridges nearby ready to be installed in the electric generator unit.

According to an aspect, there electric generator unit comprises a display as a part of a user interface. The user interface can include control switches (push button, rotary switch, or the like).

Each individual compartment may be equipped with a cartridge presence detector. For each slot, the main control unit is therefore informed about the presence or not of a hydrogen cartridge.

Each individual compartment may be equipped with an electronic tag reader (e.g. RFID reader). In case each hydrogen cartridge is fitted with an electronic tag (e.g. RFID), the presence and exchange of information (cartridge particulars) are easily managed. RFID or NFC techniques can be used.

Each individual compartment can be equipped with a magnetic interface, to supply recharge energy to the embedded battery and possibly to energize the electro-valve in a contactless manner.

According to a further aspect, the cartridge individual data is sent directly from each electronic unit to the main control unit, via a short range wireless coupling, like Bluetooth^{™} or NFC, or via a transponder interface.

According to a further aspect, the cartridge individual data is sent from each electronic unit to the main control unit, via a local network ('WLAN' or hotspot) or a cellular network. A remote server is usually involved (indirect route).

According to one aspect, the system further comprises a baseplate or chassis configured to provide a lifting ability with a cart. The electric generator unit is a movable/transportable entity.

According to one aspect, the system further comprises a vent circuit. This allows to secure the exhaust to the atmosphere, in case of purge or overpressure.

According to one aspect, there is provided at least an overpressure safety valve. Inadvertent overpressure is evacuated through said safety valve. The safety valve is a bleed valve to discharge or vent the excess outwards (toward the atmosphere here). Safety valves can be provided at each hydrogen cartridge, at the nitrogen reservoir, and at the fuel cell inlet pipe.

According to one aspect, there are provided straps to secure mechanically each hydrogen cartridge in its slot. This prevents shocks under transportation conditions.

According to one aspect, the payload capacity of each hydrogen cartridge is preferably comprised between 500 grams and 2 kg of hydrogen gas. Such a mass provides substantial autonomy. According to a possible option, the payload capacity is comprised between 600 grams and 850 grams more preferably comprised between 700 grams and 800 grams.

According to one aspect, the weight of each hydrogen cartridge is less than 45 kilograms. Optionally, the weight of each hydrogen cartridge is less than 30 kg or even less than 25 kg. This allows manual handling by an end user (one or two persons) without particular assistance.

The present disclosure is also directed to a system comprising a plurality of hydrogen cartridges and the electric generator unit as described above.

The present disclosure is also directed to a system/assembly comprising a plurality of hydrogen cartridges and an electric generator unit as described above. Such a plurality of electric generator units forms a network of generators, that maybe rented, and distributed across a large geographical area.

### BRIEF DESCRIPTION OF THE DRAWINGS

Other features and advantages of the invention appear from the following detailed description of its embodiments, given by way of non-limiting example, and with reference to the accompanying drawings, in which:
- Figure 1 illustrates diagrammatically an overview of the promoted electric generator unit, with a detailed view of the head unit at the left side of the figure,
- Figure 2 shows a schematic fluid block diagram of an example of the promoted electric generator unit,
- Figure 3 shows a schematic electrical block diagram of an example of the promoted electric generator unit, with a basic head unit at the hydrogen cartridges,
- Figure 4 shows a schematic electrical block diagram of another example of the promoted electric generator unit, with an electronic head unit at the hydrogen cartridges
- Figure 5 shows a functional diagram including an illustration of an example of user display
- Figure 6 shows schematically a hydrogen cartridge arranged in a slot and coupled to the base of the electric generator unit.

### DETAILED DESCRIPTION OF THE DISCLOSURE

In the figures, the same references denote identical or similar elements. For the sake of clarity, various elements may not be represented at scale.

### General overview

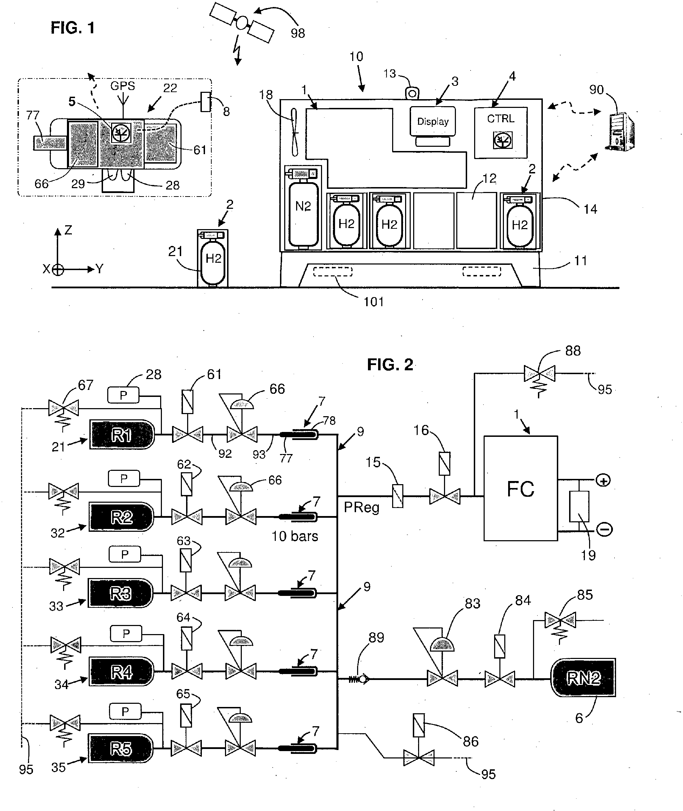

Figure 1 shows an exemplary system according to the present disclosure. The promoted unit is generally a hydrogen based electric generator unit generally denoted **10.**

The electric generator unit comprises a fuel cell **1.** Fuel cells are known per se, thus not described here in detail. Advantageously the electric generator unit emits only water and emits no polluting gas; therefore, it can be used indoors and/or in protected environmental conditions.

In the illustrated example, the electric generator unit comprises a baseplate **11.** This forms a strong frame to support all the rest of the device.

There are four feet at the corners, and at least a recess to let a passage for forks **101** of a forklift cart. In addition, or alternately, the electric generator unit may comprise a lift ring **13** to hoist the unit when it is necessary.

The inner components are covered and protected by an outer housing **14** having a general parallelepiped shape. There may be provided access doors for hydrogen resupply and for servicing the unit.

In some embodiments, overall dimensions can be comprised between 50x50x80 cm and 150x150x250 cm. Larger dimensions are also considered. Other shape factors are also considered.

In one embodiment, the weight of the electric generator unit can be comprised between 300 kg and 1500 kg. In other embodiments, the weight of the electric generator unit, with no hydrogen cartridge therein, can be comprised between 50 kg and 150 kg.

The weight and dimensions are by no way limitative features.

The electric generator unit comprises at least a fan **18** for thermal management and heat evacuation. In addition, or alternately, other heat evacuation means can be used.

In the illustrated example, the electric generator unit comprises five **slots 12,** each slot is a place to house one hydrogen cartridge. Said slot can be formed as an individual compartment.

There are provided several hydrogen cartridges **2.** Each hydrogen cartridge **2** can be removably mounted in the electric generator unit. Features of the hydrogen cartridges are discussed below. In the illustrated example, the hydrogen cartridges **2** are housed in an interior volume of the housing **14.** The electric generator unit **10** is a ready-to-use entity. Electrical consumers can be supplied by such unit, without any other ancillary equipment. Oxygen is of course supplied from environmental air.

The electric generator unit comprises a main control unit **4** for controlling the operation of the electric generator unit **10.**

The electric generator unit comprises a display **3** for displaying information about the operation of the electric generator unit **10.** The user interface can also include control switches (push button, rotary switch, or the like) and/or a tactile interface provided on the display as known per se.

### Hydrogen cartridges - overall

Here the hydrogen cartridge is a reusable hydrogen gas unit or otherwise hydrogen gas module, that can be refilled, and easy to handle and couple to a counterpart device. Here the hydrogen cartridges are interchangeable.

All the hydrogen cartridges **2** involved in the system share a common mechanical interface and a common fluid interface.

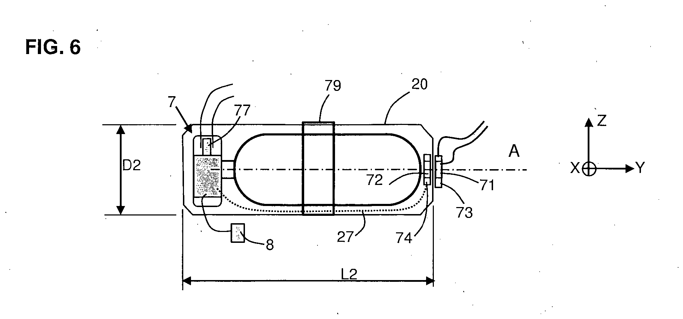

The hydrogen cartridge comprises a pressurized bottle **21** having a longitudinal axis denoted A and depicted in Figure 6. In the illustrated example in Figure 1, the longitudinal axis is shown in a vertical position, however in practice, the longitudinal axis can be arranged in a horizontal position as shown in Figure 6.

### Head unit - not instrumented

Each hydrogen cartridge **2** comprises a head device **22.** The head device forms a cap for the bottle.

In a first embodiment, each hydrogen cartridge **2** comprises, besides the pressurized bottle **21,** a basic head device **22.** The head device **22** includes an electro-valve **61.** Said electro-valve is an ON/OFF electro-valve. More precisely, in an activated/energized state, the valve is open, and fluid is allowed to flow from the pressurized bottle into an output conduit **92** towards an output port. In a deactivated/de-energized state, the valve is closed, and the output conduit is not supplied.

Downstream the electro-valve, there is arranged a pressure regulator **66** included in the hydrogen cartridge **2.** The pressure regulator provides fluid (here hydrogen) at a regulated pressure at the output port/pipe **93.** In the illustrated example, the output regulated pressure **PReg** is about 10 bars. The pressure step down can be from 700 bars to 10 bars. In one embodiment, the pressure stepdown can be from 350 bars to 10 bars.

The head device **22** may be connected to an output pipe **93** that exhibits a male fluid quick coupler **77.** The male fluid quick coupler **77** is adapted to mate with a counterpart female fluid quick coupler **78.** Of course, male and female can be inversed.

As a non limitative example, the fluid quick coupler can be BRH08 sold by Staübli^{™} or QC6 series from Swagelok^{®}, or any like solution.

The head device **22** may further comprise a safety valve **67.** As known per se, discharge fluid occurs in case the inner pressure exceeds a predefined threshold.

The head device **22** includes a pressure sensor **28.** The pressure sensor is chosen to measure pressures up to 1000 bars, or to measure pressures up to 500 bars.

The head device **22** may include a temperature sensor **29.** The temperature sensor can be a thermistor, whose resistance varies according to a prevailing temperature such as a CTN.

The hydrogen cartridge **2** comprises a coupling electrical connector **8.**

The electrical connector **8** comprises electrical ways allocated to the electro-valve control, the pressure sensor signal, and the temperature sensor signal.

In practice, the electrical connector **8** comprises 2 ways for the electro-valve control (control of coil), 3 ways for the pressure sensor (2 for supply, 1 for signal), 3 ways for the temperature sensor (2 for supply, 1 for signal).

In this baseline embodiment, the head device has no electronic unit. There is no wireless message exchanged between the main control unit **4** and the hydrogen cartridge **2.** There is no remote entity involved. Every data link is a wired data link. This ensures electromagnetic stealth, notably for military applications.

### Head unit - instrumented

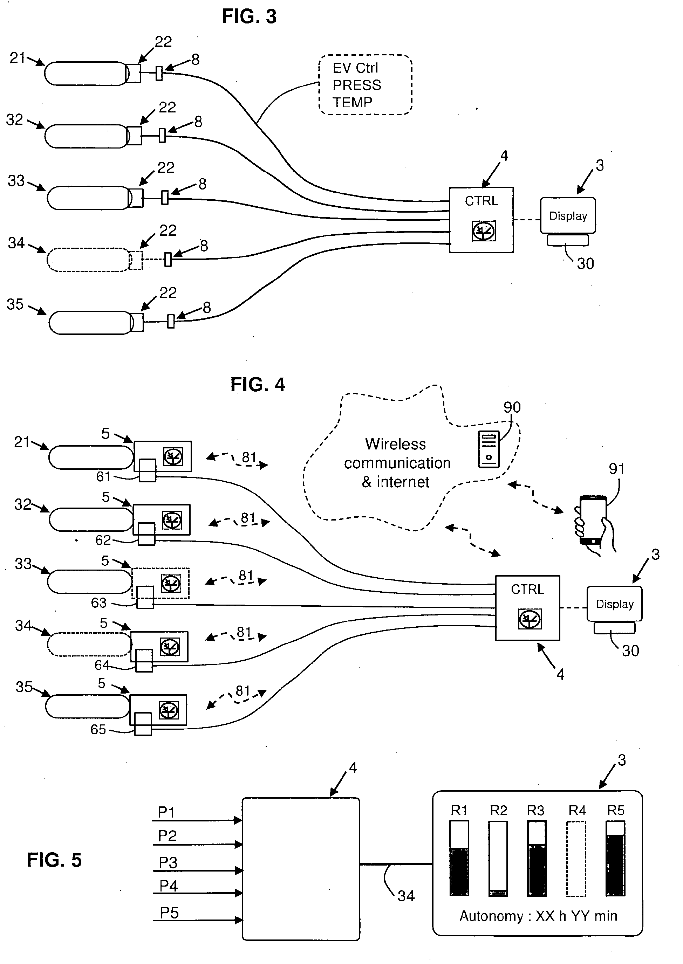

Here the head device **22** is more sophisticated. Basically, the head device comprises the above-mentioned elements: electro-valve **61,** pressure regulator **66,** pressure sensor **28,** temperature sensor **29,**
In addition, the head device **22** comprises an electronic unit **5** with a PCB and a processor. On the electronic unit **5,** there is provided communication means to collect and transmit cartridge data to a remote entity (away, distant or in the vicinity). In Figure 4, the uplink communication links are denoted **81** each in correspondence with cartridges respectively denoted **21,32,33,34,35.**

The pressure sensor **28** and temperature sensor **29** are both wiredly connected to the electronic unit **5.**

The head device **22** may comprise an internal battery to supply the electronic unit **5** and the sensors. The battery exhibits a capacity of at least 3000 mAh. The battery capacity can be comprised between 1000 mAh and 5000 mAh.

The battery can be of a rechargeable type. The voltage of the battery can reflect the current state of charge of the battery. The current percentage of battery charge can be made available to the remote server. The head device **22** may comprise a switch to disconnect the internal battery.

In addition, the head device **22** may comprise at least one LED. The LED is lighted briefly to reflect the current status of the head device. There may be provided two LEDs.

In addition, the head device **22** may comprise an input for acquiring the status of the electro-valve **61** (notably when said electro-valve is controlled by a device external to the head device **22,** e.g. the main control unit **4**).

The communication means may comprise a 5G or LTE coupler. The head device **22** comprises an antenna. The communication means may comprise a LoRa or Sigfox coupler. The communication means may comprise a WiFi/WLAN coupler.

The system further relies on communication links, using partly wireless sections and wired sections, as known per se in the field of telecommunications.

In addition, the head device **22** may comprise a geolocation receiver for receiving the signals from satellites **98.** The system may rely on geolocation satellites from the systems GPS, Galileo, Glonass or the like as known per se.

In addition, the head device **22** may comprise at least a USB port or a CAN port. In some lifetime cases, the head device is electrically connected to another device, like for instance a refuelling/refilling device. The port may also be used to recharge the internal battery.

The head device **22** is configured to transmit cartridge data, at least partly wirelessly, to the main control unit **4** or to a remote server **90.** Cartridge data also named herein cartridge particulars include pressure sensor data representative of the prevailing pressure in the pressurized reservoir and/or temperature sensor data, representative of an inner temperature prevailing in the pressurized reservoir.

Cartridge particulars may possibly also have a unique identifier, specific to each hydrogen cartridge. In practice, the electronic unit of the head device **22** comprises a unique identifier for each hydrogen cartridge.

Cartridge particulars may possibly also include a geolocation information.

Cartridge particulars may possibly also include other types of information, like cartridge status, remaining hydrogen quantity (in grams or in %), number of pressure cycles, and embedded electric battery level, ...

### Hydrogen cartridges - miscellaneous

In addition, there may be provided a refill port in the head device **22** or directly at the pressurized bottle **21.**

As illustrated in Figure 6, each hydrogen cartridge **2** comprises a generally parallelepiped protective casing **20** encompassing the pressurized bottle and the head device **22** therein. The protective casing is made of hard plastics. The protective casing provides mechanical protection against shocks and crashes for the pressurized bottle. The protective casing comprises opening(s) to access at least the quick coupling port 77. The protective casing comprises opening(s) to let access to user's hand thereby forming one or more handle(s) integrated into the casing.

The protective casing comprises six faces : a bottom face, four long faces, and a top face. In the illustrated example, bottom face and top face are delimited by square borders, and long faces are delimited by rectangular borders. The faces can be beveled at their ends.

The hydrogen cartridge **2** can be laid down on the ground on its bottom face or any of the long faces. On these faces, the hydrogen cartridge **2** rests in a very stable manner.

The payload capacity of each hydrogen cartridge is comprised between comprised between 500 grams and 2 Kg of hydrogen gas. Such a mass provides substantial autonomy. According to a possible option, the payload capacity is comprised between 600 grams and 1500 grams more preferably comprised between 700 grams and 900 grams.

In a non limiting example, the weight of each hydrogen cartridge is less than 45 kilograms. This allows manual handling by two persons without particular assistance, i.e. without a hoisting tool, still remaining in acceptable ergonomic and safety conditions.

In another non limiting example, the weight of each hydrogen cartridge is less than 30 kilograms or even 25 kg. This allows manual handling by one person without particular assistance, i.e. without a hoisting tool, still remaining in acceptable ergonomic and safety condition.

The height **L2** of the cartridges can be comprised between 600mm and 900mm, and the width/diameter **D2** can be comprised between 200mm and 300mm.

The pressurized bottle **24** is formed as a cylindrical enclosure with a thick cylindrical wall. The thickness of the cylindrical wall is comprised between 30mm and 50mm.

In a non limiting example, the pressurised bottle **24** can withstand pressures up to 1000 bars or more. The nominal service pressure can be 350 bars or 700 bars. Higher pressures are not excluded like 1000 bars or more.

In a non limiting example shown in Figure 6, there may be provided straps **79** to secure the hydrogen cartridge in place.

### Electric generator unit - other features

As apparent from Figure 2, there is provided a supply manifold **9** to couple in a parallel arrangement the above-mentioned female fluid quick coupler **78.** There are provided as many female fluid quick couplers as the number of cartridge slots **12.** This number is 5 in the illustrated example, but this number can be any.

The electric generator unit may further comprise an electrical battery **19** supplied by the fuel cell **1,** downstream the fuel cell between positive and negative lines. The battery **19** is able to support peaks of current consumption downstream. The battery **19** generally provides leveling/smoothening of the electrical consumption fluctuations. The battery **19** also provides power to help starting the fuel cell operation, supports peaks of current consumption, and enlarges system autonomy.

There is provided one individual compartment for each hydrogen cartridge **2.** Said otherwise, a slot can be formed as a compartment, individually accessible via a door.

The main control unit **4** controls the respective electro-valve **61,62,63,64,65** of each hydrogen cartridge **2** (respectively **21,32,33,34,35**)**.**

There is provided a fuel cell inlet electro-valve **16.**

There is provided a filter **15,** arranged upstream of the electro-valve **16.**

There is provided a safety valve **88,** arranged downstream of the electro-valve **16.**

Each individual compartment can be equipped with a cartridge presence detector. For each slot **12,** the main control unit is therefore informed about the presence or not of a hydrogen cartridge **2.**

There is provided a supply manifold purge valve **86.**

There is provided a nitrogen reservoir **6.** The nitrogen reservoir **6** is configured to be selectively coupled via an inerting electro-valve **84** to the supply manifold **9.** There is arranged a pressure regulator **83.** It is considered to render the fuel cell inert for long non-use periods, e.g. four months or more.

There is provided a check valve **89,** preventing ingress of hydrogen into nitrogen circuit.

There is provided a safety valve **85.**

According to a non limiting example, there is provided a vent pipe **95,** disposed to collect the outputs of all the safety valves.

It should be noticed that the system depicted in Figure 3 has no wireless communication feature, exhibits no electromagnetic waves.

### Information System - optional

The system further comprises a server **90.** Here the term server should be construed broadly it can be generally a server service in the cloud. As illustrated in Figure 4, the system further comprises one or more mobile computing devices such as smartphones **91.** The system may further comprise a laptop, a tablet, or any suitable computing device having a display function.

The server **90** comprises a server application configured to collect and gather data about hydrogen cartridges **2,** and about the one or more electric generator units **10** distributed across a geographical area.

For each hydrogen cartridge **2,** the server application collects a unique identifier, current geolocation, current pressure, current temperature, current filling percentage, current number of cycles, current status, and state of charge of the internal battery. The filling percentage is computed from the temperature and the pressure with the help of the expression pV = nRT.

In the cartridge status can be included a current diagnosis status and whether the hydrogen cartridge is aboard a generator unit, or in a nearby resupply storage facility.

All this information is gathered in a database, either within the same server or housed is in another server.

The server is configured to download updated cartographic data to at least a client application running on the smartphone **91,** useful for a fleet manager of an electric generator fleet. There may be a client application in any type of computing device. There may be a type of client application for the end user and another type of client application for a system manager and for a maintenance officer.

The main control unit **4** receives data from the server **90.**

There may be provided a presence detector **71.** For each slot, the main control unit is therefore informed about the presence or not of a hydrogen cartridge.

Each individual compartment can be equipped with an electronic tag reader **71** (e.g. RFID reader) connected to the main control unit **4** via wiring **27.** In case each hydrogen cartridge is fitted with an electronic tag **72,** the presence and exchange of information (cartridge particulars) is handled by the main control unit **4.**

It is also possible to provide wireless control of the electro-valve **61** through a magnetic inductive interface **74, 73** (one coil in the stationary part and one counterpart coil in the cartridge).

Corresponding coils can be arranged axially centered, at a bottom portion of the pressurized reservoir, as illustrated Of course, alternate locations for such an inductive interface can be considered.

Each individual compartment can be equipped with a magnetic charging interface, to supply an embedded battery and to energize the electro-valve (one coil in the stationary part and one counterpart coil in the cartridge).

As illustrated in Figure 5, an exemplary non-limiting configuration is depicted where the third cartridge is in service and the other ones are not in service. The fourth slot is empty, i.e. there is no hydrogen cartridge at this place. The respective current filling level of each hydrogen cartridge is shown as bar graph.

Also, at the bottom line, the total generator unit autonomy is displayed. The remaining autonomy is calculated for a reference power output, e.g. 15kW. Of course other data can be displayed, either as a basic function or as an on-demand function.

In practice, the hydrogen remaining quantity index is computed by the main control unit **4.** The main control unit calculates a sum of the hydrogen remaining quantities in all the present hydrogen cartridges in the electric generator unit and computes therefrom a remaining fuel autonomy for the electric generator unit.

The displayed data is transmitted from the main control unit **4** to the display **3** via a data link **34.**

**P1** to **P5** denote the respective pressures acquired from the hydrogen cartridges. As explained above, this acquisition is done through a wired connection or through a wireless connection.

In the example, the hydrogen cartridge number 2, denoted **R2,** is to be exchanged since it has been exhausted. An operator has to disconnect the quick fluid connector **7** and the electrical connector **8,** then remove the empty cartridge and place a full cartridge instead in the same slot or compartment.

It should be understood that the disconnection and the connection of the quick fluid connector **7** takes place even though there is a nominal prevailing pressure in the supply manifold (which is under pressure **PReg** of about 10 bars). There is no hydrogen leak during the connecting and disconnecting process.

The operator has to connect the quick fluid connector **7** and the electrical connector **8.**

It is to be noted that this exchange may occur while the fuel cell is supplied by the third cartridge.

## Claims

1. An electric generator unit (10) comprising at least a fuel cell (1), a main control unit (4) for controlling the operation of the electric generator unit, and a plurality of cartridge slots (12), wherein the fuel cell (1) is configured to be supplied by a plurality of hydrogen cartridges (2), each hydrogen cartridge being removably mounted in one cartridge slot of the electric generator unit, wherein the plurality of hydrogen cartridges is configured to be fluidly coupled to a supply manifold (9) in a parallel arrangement, wherein each of the plurality of hydrogen cartridges (2) comprises a pressurized reservoir (21), a head unit (22) with a pressure sensor (23) an electro-valve (61,65) and a gas regulator (66), wherein each hydrogen cartridge is removably coupled to the supply manifold (9) by a quick connect fluid connection (7).

2. The electric generator unit according to claim 1, wherein the electro-valve (61,65) of each hydrogen cartridge is controlled by the main control unit, via an electrical connector (8) coupling the hydrogen cartridge to the main control unit.

3. The electric generator unit according to claim 1, wherein the main control unit acquires, for each hydrogen cartridge, a sensed pressure (Pi) prevailing in the corresponding pressurized reservoir (21).

4. The electric generator unit according to claim 2, wherein the electrical connector (8) comprises electrical ways allocated to :
- electro-valve control,
- pressure sensor,
- temperature sensor.

5. The electric generator unit according to any of claims 1 to 4, wherein there is provided a nitrogen reservoir (6) configured to be selectively coupled to the supply manifold (9) in order to render the fuel cell inert for long non-use periods.

6. The electric generator unit according to any of claims 1 to 4, wherein there is provided a supply manifold purge valve (86) to purge the supply manifold (9) before rendering the fuel cell inert.

7. The electric generator unit according to any of claims 1 to 5, wherein each of the plurality of hydrogen cartridges (2) comprises an electronic unit (5) configured to acquire a sensed pressure prevailing in the pressurized reservoir, to assess a hydrogen remaining quantity index and to wirelessly send cartridge individual data toward the main control unit (4).

8. The electric generator unit according to claim 7, wherein the cartridge individual data includes at least a pressure sensor data and a temperature sensor data, and possibly a unique identifier.

9. The electric generator unit according to any of claims 1 to 6, wherein the cartridge individual data is sent directly from each electronic unit to the main control unit (4), e.g. via a short range wireless coupling, or via a transponder interface.

10. The electric generator unit according to any of the claims 1 to 7, wherein the cartridge individual data is sent from each electronic unit to the main control unit (4), via a local network or a cellular network involving at least a remote server (90).

11. The electric generator unit according to any of claims 1 to 9, further comprising a baseplate (11) configured to provide a lifting ability with a cart.

12. The electric generator unit according to any of claims 1 to 9, further comprising a common vent circuit (95).

13. The electric generator unit according to any of claims 1 to 9, further comprising at least an overpressure safety valve (66,85,88).

14. The electric generator unit according to any of claims 1 to 9, wherein there are provided straps to secure mechanically each hydrogen cartridge.

15. A system comprising a plurality of hydrogen cartridges (2) and the electric generator unit (10) according to any of the claims 1 to 14.
